(19) Europäisches Patentamt
European Patent Office
Office européen des brevets

(11) EP 4 757 306 A1

(12) EUROPEAN PATENT APPLICATION

(43) Date of publication:
10.06.2026 Bulletin 2026/24

(21) Application number: 24217876.2

(22) Date of filing: 05.12.2024

(51) International Patent Classification (IPC):
H04N 7/18 (2006.01)    H04L 65/752 (2022.01)
H04N 21/2187 (2011.01)    H04N 21/2343 (2011.01)
H04N 21/24 (2011.01)    H04N 21/2662 (2011.01)

(52) Cooperative Patent Classification (CPC):
H04N 21/2187; H04L 65/612; H04L 65/752;
H04L 65/80; H04N 7/183; H04N 21/23439;
H04N 21/2402; H04N 21/2662

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Axis AB
223 69 Lund (SE)

(72) Inventors:
• Jonsson, Axel
223 69 LUND (SE)

• Sternerup, Johan
223 69 LUND (SE)
• Cremon, Jonas
223 69 LUND (SE)
• Pettersson, Mattias
223 69 LUND (SE)
• Edpalm, Viktor
223 69 LUND (SE)

(74) Representative: AWA Sweden AB
Matrosgatan 1
Box 5117
200 71 Malmö (SE)

(54) A METHOD OF STREAMING LIVE CODED VIDEO

(57) A method (300) for streaming live coded video to one or more clients is disclosed. The method comprises: detecting (S302) a plurality of video stream requests; obtaining (S304) maximum bitrate values that return video streams are allowed to have; calculating (S306) requested quality of experience, QoE, values; determining (S308) a number of return video streams being lower than the plurality of video stream requests, and having bitrates such that each of the video stream requests can be matched with a return video stream, wherein the bitrates of the return video streams are determined such that a cumulative difference between the QoE value of each video stream request and a calculated return QoE of a matching return video stream is minimized; obtaining (S312) the return video streams; and streaming (S314) the return video streams. A streaming controller (20) for controlling streaming of live coded video is also disclosed.

300

S302
Detect a plurality of video stream requests from client(s)

S304
Obtain maximum bitrate value for return video streams

S306
Calculate requested QoE values

S307
S308
Determine a number of return video streams

S310
Determine bitrates of return video streams

S312
Obtain the number of return video streams

S314
Stream the return video streams to the client(s)

Fig. 3

EP 4 757 306 A1

**Description**

Technical field

The present invention relates to a method and a system for streaming live coded video to one or more clients, and more particularly to a method and system for optimizing the quality of experience (QoE) for each client.

Background

The widespread adoption of real-time communication technologies has led to increased demand for efficient and scalable video streaming solutions. Some peer-to-peer technologies, for example WebRTC (Web Real-Time Communication), offers low latency but struggle to scale with a growing number of peers. WebRTC enables real-time communication, including voice, video, and data sharing, directly within web browsers. When multiple peers connect to a single video camera, each peer's varying capabilities and fluctuating bandwidth create challenges in delivering optimal video quality.

Current approaches to address these limitations involve producing a single stream at the lowest common quality, sacrificing overall quality, or generating multiple streams at fixed bitrates, resulting in suboptimal quality for some peers. Furthermore, cameras often face constraints on the number of simultaneous streams they can produce.

There is evidently a need for improving current solutions to enable efficient and scalable video streaming.

Summary of the invention

An aim of the present invention is to provide an increased overall quality of video in a plurality of video streams that are streamed to one or more clients. Another aim of the present invention is to provide a method of determining characteristics of video to be encoded and streamed so as to optimize the video quality of the streamed video as perceived by a user. A further aim of the present invention is to provide a method of determining characteristics that is flexible in view of adapting to changed prerequisites, for example when a request for a video stream is added, removed, or changed.

The present invention is defined by the appended claims.

According to a first aspect of the invention, a method according to **claim 1** is provided. A novel concept of the invention is to consider a global perspective of the quality loss rather than determining video quality of a video stream in view of a single video request. In addition, by looking at the loss of Quality of Experience, QoE, the user perspective of quality is taken into account instead of a strict technical character of the video stream. In general, Quality of Experience (QoE) refers to the overall satisfaction and perceived quality of a user's interaction with a service, system, or product. In the context of video streaming, QoE encompasses factors such as video resolution, compression level, frame rate, latency, and buffering time, which collectively impact the viewer's experience.

Specifically, the metric (or measure) QoE is used for determining the quality of a video stream and the configuration of the video streams are determined such that a minimum *global* loss in QoE is provided in view of all video streams. This approach may provide an increased overall visual experience of the video quality and increased user satisfaction.

In some embodiments, the maximum bitrate value is obtained from the video stream request itself. In other embodiments, the maximum bitrate value is determined based on an available bandwidth for transmission of the return video stream. The available bandwidth may be calculated by a congestion control algorithm.

In some embodiments, the number of return video streams is calculated in view of the amount of video stream requests in the plurality of video stream requests. This enables an adjustment of the number of return video streams based on changing demand to a low processing cost.

In some embodiments, the number of return video streams is calculated according to a predefined formula being a function of the amount of video stream requests. The predefined formula may be a logarithmic function. This provides a scalable approach to managing multiple video stream requests, with low computational complexity.

In some embodiments, the method takes into account a preferred power consumption for an encoder that encodes the return video streams. This can enable the system to balance minimization of both QoE loss and power consumption, reducing energy costs and heating in a device comprising the encoder while maintaining acceptable video quality.

In some embodiments, the requested QoE values and return QoE values are calculated using one or more of the following measures or metrics: SSIM, PSNR, VMAF, and UQI. Different metrics may be made compatible for comparison by applying a normalization algorithm.

The encoding characteristics may be determined from the video stream request, predetermined encoding characteristics, or a combination of both. The predetermined encoding characteristics may depend on a video scene for the requested video stream. Specifically, the predetermined encoding characteristics may specify different encoding characteristics depending on the content of the video, for example the kind of scene that the video depicts. Non-limiting examples of scene types include outdoor, indoor, traffic, panoramic view, or 360 degrees view. Alternatively, or in addition, the predetermined encoding characteristics may depend on a type of camera used for capturing the requested video stream, for example wearable camera, static camera, camera with moving capabilities (for example a PTZ camera), modular camera, or panoramic camera. The requested QoE value for each video stream request is calculated in view of the requested encoding characteristics, or in view of the predetermined encoding characteristics, or a combination of both, whichever is valid for the video stream request.

According to a second aspect, the present invention is defined in **claim 11** which defines a computer-readable medium having stored thereon instructions that, when executed by a processor, cause the processor to perform the method according to the first aspect or any embodiment thereof.

According to a third aspect, the present invention is defined in **claim 12,** which defines a streaming controller for controlling streaming of live coded video to one or more clients. The streaming controller comprises circuitry that are adapted to perform the method according to the first aspect or any embodiment thereof.

According to a fourth aspect, the present invention is defined by **claim 13,** which defines a camera system comprising the streaming controller described above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Brief description of the drawings

The invention will now be described in more detail by way of example and with reference to the accompanying schematic drawings, in which:

Figs. 1a and 1b illustrate camera devices being adapted to stream live coded video according to prior art,
Fig. 2 illustrates a camera device adapted to stream live coded video according to an embodiment,
Fig. 3 is a flowchart of a method for streaming live coded video according to an embodiment,
Fig. 4 illustrates a relationship between bitrate and QoE for a plurality of video streams, and
Fig. 5 illustrates a camera device and a relay device adapted to stream live coded video according to an embodiment.

Detailed description of embodiments

A common setup for delivering video to a client is streaming of live coded video. In this context, "live coded" means that video is coded and streamed directly to a receiver of the stream which can be a recorder, video management system (VMS), server, or similar. In contrast, streaming of recorded (stored) video (that has been coded before being stored) does not meet the definition of live coded video in the context of this application. Non-limiting examples of streaming protocols that can be used for streaming of live coded video include WebRTC, RTSP, Warp (Live Media Transport over QUIC), Media-over-QUIC, HLS (HTTP Live Streaming), and DASH (Dynamic Adaptive Streaming over HTTP). Network technologies used for the streaming of live coded video may be wired or wireless such as Wi-Fi networks or networks based on cellular technology (e.g., 5G).

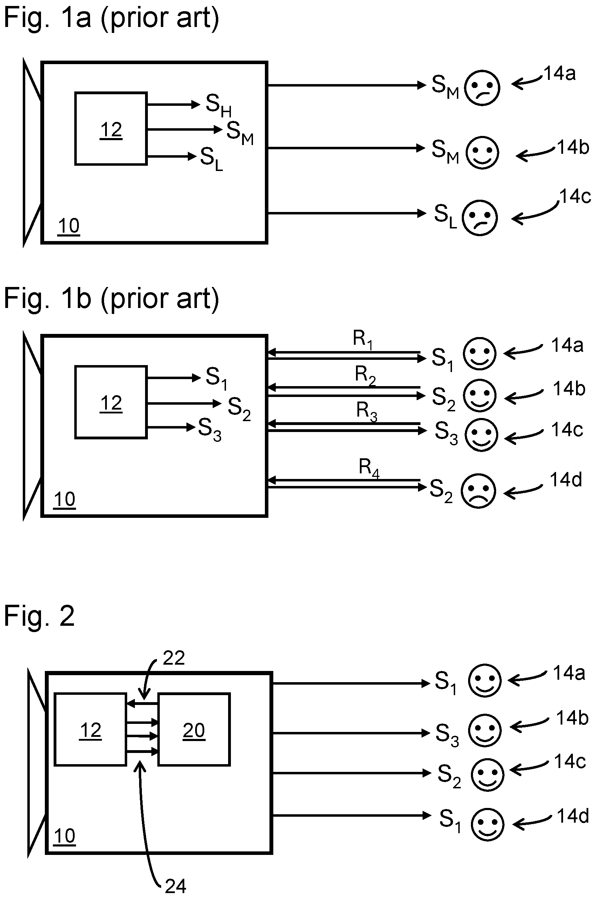

Fig. 1a illustrates a camera device 10 which is adapted to perform streaming of live coded video according to prior art. The camera device 10 comprises a video encoder 12 that is configured to encode video data (captured by an image sensor of the camera device 10) into three video streams $S_H$, $S_M$, $S_L$ with different fixed bitrates H (high), M (medium), and L (low). For example, the streams may differ in terms of resolution, FPS, and/or compression settings which results in different bitrates. The bitrate is in general an indicator of how much the encoded video data has been degraded compared to the originally captured video data, for example decreased in resolution, FPS, or being compressed to a certain degree. In other words, the data of the video stream $S_M$ has less degradation compared to the data of the video stream $S_L$ but more degradation compared to the data of the video stream $S_H$.

There are three clients 14a-14c that each wants to receive a live coded video stream from the camera device 10. By client is in the context of this application meant a receiver of live coded video data. Clients can have different purposes for receiving the live coded video stream, for example storage (video recording), display for an operator, or video processing, for example performing video analytics such as object detection, tracking, or event detection. In the scenario of Fig. 1a, each client 14a-14c can choose, via for example a request, to receive one of the predefined video streams $S_H$, $S_M$, or $S_L$. Alternatively, the camera device 10 can be configured to send the video stream with the highest possible bitrate that each client can receive upon an unspecified request for video from the client 14a-14c. The configuration of Fig. 1a can result in varying degradation in perceived video quality for the different clients 14a-14c depending on how well their requested or expected video corresponds to the predefined video streams. This kind of quality is referred to as Quality of Experience (QoE). In general, QoE refers to the overall satisfaction and perceived quality of a user's interaction with a service, system, or product. QoE is related to the measure Quality of Service (QoS) which is a measure indicating the quality of the actual data and/or transmission network. In contrast, QoE metrics aim to quantify the user's subjective experience. In other words, a QoS metric could but is not designed to indicate the quality of the user's experience, while a QoE metric is constructed to indicate quality as experienced by the user. The clients 14a-14c will thus with the setup of Fig. 1a experience varying losses in QoE depending on how well the predefined video streams matches their requests or expectations.

The prior art configuration of the camera device 10 in Fig. 1a has limitations in terms of flexibility to adapt to the needs of different clients 14a-14c, especially in scenarios where the needs can vary over time. Fig. 1b illustrates a camera device 10 with an enhanced flexibility in this respect. In this scenario, the clients 14a-14d are allowed to make specific video stream requests $R_1$-$R_4$ that define requested video stream characteristics and video stream bitrates. The encoder 12 is then instructed to encode video streams accordingly and the camera device 10 can provide the adapted video streams in response to the video stream requests $R_1$-$R_4$. Clients 14a-14c receiving return video streams of the requested bitrate are thus perfectly satisfied since the QoE of requested video stream is equal to the QoE of the returned video streams. However, the encoder 12 in the camera device 10 has limited encoding capacity. If the number of video stream requests $R_1$-$R_4$ with different characteristics and bitrates exceeds the available encoding capacity, there will be one or more clients 14d that need to settle with receiving video according to another video stream request. As a result, the overall loss with respect to QoE, i.e. decrease from requested QoE to returned QoE, become unevenly spread across clients, and factors such as timing of video requests can have an unreasonably high impact on the QoE loss for an individual client.

Fig. 2 illustrates a camera device 10 adapted for streaming live coded video streams to a plurality of clients 14a-14d according to an embodiment which aims to improve prior art solutions, in particular with respect to QoE for the clients 14a-14d. The clients 14a-14d send a plurality of video stream request to the camera 10 for requesting a video stream. The video stream requests may comprise a simple request with the basic meaning of "I want to receive a live video stream" or a more detailed and complex request including desired encoding characteristics and/or desired or maximum allowed bitrate for the requested video stream. It should be noted that a single client may send a plurality of video stream requests (one for each desired video stream), meaning that the plurality of video stream requests can originate from a single client. Put differently, the number of clients is one or more, while the number of video stream requests are multiple for the embodiments.

The camera device 10 comprises an encoder 12 and a streaming controller 20. Similar to the examples of prior art disclosed above, the encoder 12 is a conventional video encoder which is adapted to encode video data according to one or more established video coding formats. Non-limiting examples of video coding formats (codecs) include H.264 (MPEG-4, AVC), H.265 (HEVC), H.266 (WC), and AV1. The streaming controller 20 is in this embodiment part of the camera device 10 and is configured to control the configuration of video streams that are live coded in view of information about the clients 14a-14d. The streaming controller 20 is adapted to send encoding instructions to the encoder 12 and receive encoded return video streams 24 from the encoder. The streaming controller 20 is further adapted to instruct transmittal of video streams on a detailed level, that is which encoded return video stream 24 that should be sent to which client 14a-14d. The streaming controller 20 can also be adapted to receive and process information about the clients 14a-14d, in particular information included in video stream requests and information from bandwidth estimations for transmission channels between the camera 10 and the clients 14a-14d. For the purpose of executing its functionality and processing data, the streaming controller 20 comprises circuitry which can be in the form of hardware, software, or a combination thereof.

The streaming controller 20 is configured to determine configurations of video streams to be returned to the clients 14a-14d based on a principle of minimizing the overall (global) QoE loss for the clients 14a-14d. In other words, the return video streams are configured such that the total decrease in QoE of the requested (desired, expected) video streams accumulated for all clients 14a-14d is minimized for a determined number of return video streams. By using a control mechanism with a global perspective of ensuring an optimal QoE for the clients 14a-14d, the risk that a few clients suffer heavy degradation with respect to QoE is decreased. The principle based on a global perspective counteracts an unbalanced quality decrease for the clients 14a-14d even though a higher number of clients 14a-14d may experience a minor decrease in QoE compared to prior art. However, a major loss for the few may have much larger impact on user experience than a minor loss for the many, which is a founding realization for the present invention.

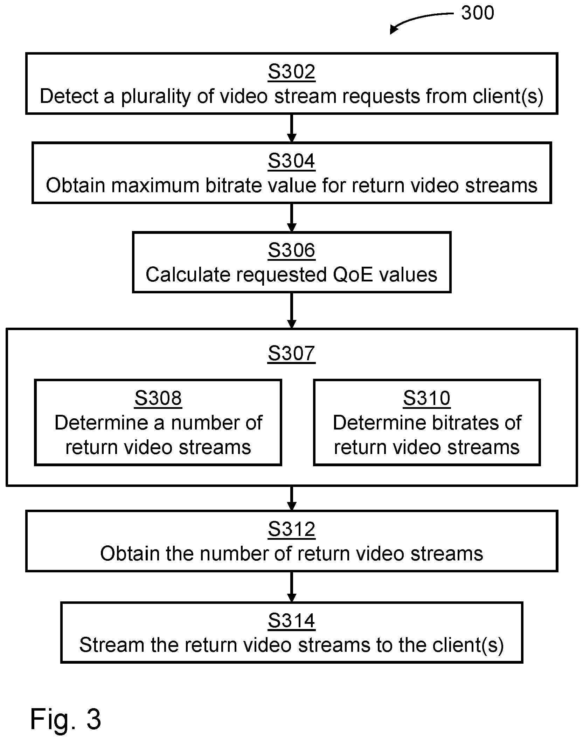

Going more into details of the solution, the streaming controller 20 is configured to perform a method 300 as illustrated by Fig. 3.

An initial step in the method 300 is to detect S302 a plurality of video stream requests from the clients 14a-14d. In this example, there are several clients 14a-14d, however other embodiments may encompass a single client that generates a plurality of video stream requests. The video stream requests may be simple or complex as explained above, and a combination of simple and complex requests is feasible.

Next, maximum bitrate values that return video streams are allowed to have are obtained S304 based on the video stream requests. By maximum bitrate value may be meant a maximum bitrate value that ensures that the return video streams are transmitted with a minimal risk of packet loss or with a certain maximum (estimated) degree of needed packet re-transmittal. The maximum bitrate value may be defined by the client 14a-14d or by the streaming controller 20 or other module in the camera 10.

In one embodiment, the maximum bitrate value for each return video stream may be included in and thus obtained from the video stream request (for some or all of the video stream requests). In this embodiment, the client 14a-14d sending the video stream request may determine the maximum bitrate value. In another embodiment, the maximum bitrate value is estimated by the streaming controller 20 or another module of the camera device 10. For example, a so-called congestion control algorithm can be executed for determining available bandwidth for transmission of data from the camera device 10 to one of the clients 14a-14d. As another option, the maximum bitrate value may be known beforehand for a particular client or transmission channel. The maximum bitrate value may thus be retrieved as a stored value in a memory being in communicative connection with the streaming controller 20. These are known examples of determining a maximum bitrate for return video streams and utilized in conventional video streaming techniques and are considered to be available for the skilled person without disclosing further details herein.

When the maximum bitrate values have been obtained S304, requested QoE values are calculated S306 for each video stream request. By requested QoE value is meant the QoE value (according to a selected metric) of a video stream corresponding to the video stream request, i.e. the video stream that the client sending the video stream request expects or desires in return. Similar to a data quality indicator or a QoS value, a QoE value for a video stream indicates a degree of quality degradation, in view of perceived quality for a user, as a result of processing of the video data captured by an image sensor for the purpose of generating the video stream to be transmitted to a client. The processing involves, for example, image processing in an image processing pipeline and encoding (including compression). The QoE value could also be calculated in view of estimated or measured distortion caused during transmission to the client. In the context of video streaming and in this application, calculations of QoE values may encompass factors such as video resolution, frame rate, GOP length, codec, bitrate variation, latency, and buffering time, which collectively impact the viewer's experience.

There are well established QoE metrics that are designed for the purpose of indicating a quality value reflecting a user's quality experience for video. The disclosed method 300 can be performed in view of any of these known metrics as long as the calculated QoE values are comparable. Non-limiting examples of metrics that can be used include Structural similarity index measure (SSIM), Peak signal-to-noise ratio (PSNR), Video Multimethod Assessment Fusion (VMAF), and Universal Quality Index (UQI). To ensure that different metrics are comparable, normalization algorithms may be utilized. For example, a first QoE value is calculated for a first video stream with a first FPS value generated according to a first metric and a second QoE value is calculated for a second video stream with a second FPS value generated according to a second metric. The first metric is calculated in view of FPS while the second metric is not. To be able to compare the first and second QoE values, the second QoE value can be normalized by multiplying it with a factor corresponding to a ratio between the first and second FPS values. A similar reasoning can be applied to other encoding characteristics, for example resolution. A QoE value that is not calculated based on resolution can be compared with a QoE value that is by multiplying the first one with a factor corresponding to a ratio between the resolutions of the concerned video image streams.

The requested QoE value may be calculated S306 based on encoding characteristics included in the corresponding video stream request, if available. Generally, encoding characteristics encompasses encoding options or encoding settings that define how video data is encoded by the encoder 12. Non-limiting examples of encoding characteristics include FPS, resolution, GOP structures, and compression (e.g., QP settings). The requested encoding characteristics may include, for example, a requested resolution and/or a requested FPS. For requests where this information is not provided, predetermined encoding characteristics may be used for the calculation of the requested QoE value. The predetermined encoding characteristics may be constructed to aim at a defined best encoding mode for a receiving client. The meaning of best encoding mode may differ between clients depending on what the video stream is used for or what it represents. For example, one set of encoding characteristics may provide a best encoding mode for storage of video and another set of encoding characteristics may provide a best encoding mode for processing by video analytics. Moreover, one set of encoding characteristics may provide a best encoding mode for traffic video (i.e., video capturing a traffic scene) while another set of encoding characteristics may provide a best encoding mode for video of indoor environments. The type of camera may also affect the predetermined encoding characteristics, for example a static camera compared to a wearable camera (or body-worn camera).

It is noted that the requested QoE values may be calculated based on a combination of information obtained from the corresponding video stream request, such as requested FPS, and predetermined encoding characteristics, for example a resolution providing a best encoding mode for a panoramic view.

Next, the streaming controller 20 performs an optimization process S307 with the purpose of determining a number of return video streams and their bitrates. The optimization process S307 includes a first action of determining S308 a number of return videos, which is lower than the number of detected stream requests. The optimization process S307 also includes a second action of determining S310 bitrates of the return video streams. The first and second actions may be performed in series (one after another) or as a combined action where both first and second actions are performed at the same time and possible in dependence with each other. It should be noted that the terms "first" and "second" are not indicative of the order in which the actions are performed, meaning that the second action can be performed before the first action.

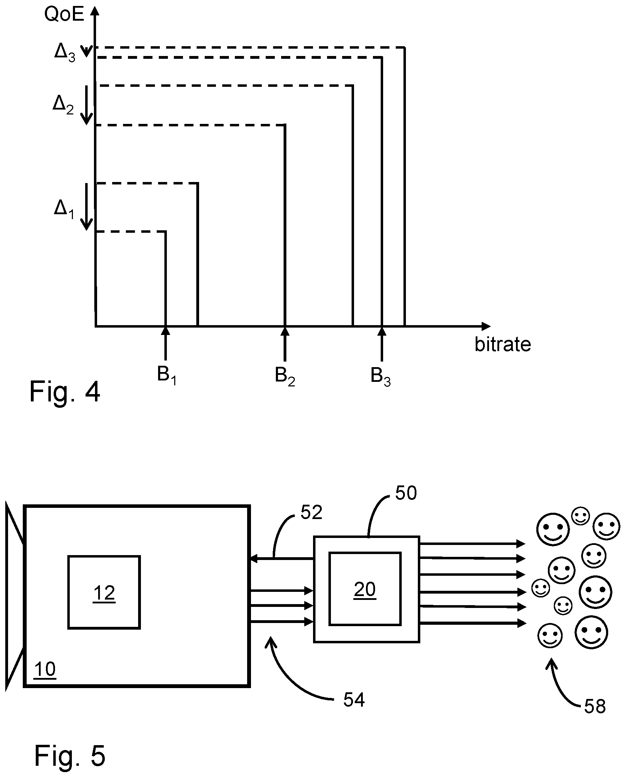

The purpose of the optimization process S307 is to determine a number of return video streams and their bitrates such that a cumulative difference between the QoE value of each video stream request and a calculated return QoE of a matching return video stream is minimized for the determined number of return video streams. This difference is referred to as global QoE loss. The optimization process S307 will be explained with further reference to Fig. 4 which illustrates a relationship between bitrate and QoE for a plurality of video streams that are candidates to be determined as return video streams according to one embodiment. The relationship depends on which QoE metric is used and any prerequisites for the calculation of QoE for a particular video stream request. The prerequisites for the QoE value for a particular video stream is the same as explained above in connection to calculation of requested QoE for the video stream request. For example, a requested FPS or resolution may form a prerequisite for calculating a QoE value for a video stream when being candidate for a return video to a particular video stream request. As mentioned, predetermined encoding characteristics determined in view of video scene or camera type may form prerequisites for the calculation of QoE for candidate video streams. Accordingly, a prerequisite for one or more parameters that the QoE value is calculated in view of may be valid for all candidate video streams or for a subset, i.e. one or more of the candidate video streams but not all.

Thus, the streaming controller 20 finds out the QoE values for each candidate video stream that could be generated as return video streams to match the video stream requests. These are represented as vertical lines at different bitrates in Fig. 4, and their vertical length indicate their corresponding QoE values. From this information, the streaming controller 20 determines which combination of candidate video streams that results in the least overall decrease in QoE, i.e. lowest QoE loss, accumulated for all return video streams compared to the video stream request that they are matched with. The decrease (or loss) is caused by the fact the number of return video streams are fewer than the number of video stream requests, and thereby one or more of the video stream requests need to be matched with a return video stream of lower QoE than the requested QoE. In the illustrated examples, the decreases in QoE are marked with a downward arrow $\Delta_1$, $\Delta_2$, $\Delta_3$ along the QoE axis for the requested video streams that need to be matched with a return video stream of a lower QoE (and lower bitrate). The streaming controller 20 determines a combination of return video streams $B_1$, $B_2$, $B_3$ for which the accumulated decrease, i.e., the accumulated decrease corresponding to the downwards arrows $\Delta_1$, $\Delta_2$, $\Delta_3$ are minimized for the determined number of return video streams (in this case three).

The streaming controller 20 solves this optimization problem by conventional mathematical methods. The task for the streaming controller 20 is to determine the number of return video streams and their bitrates, wherein the number of return video streams may be set as a fixed value before determining the bitrate values or may be a parameter that the streaming controller 20 is allowed to vary as part of solving the optimization problem. A further aspect that the streaming controller 20 considers when solving the optimization problem is that all video stream requests should be possible to match with a return video stream. Depending on the characteristics of the system that the streaming controller 20 is part of, this aspect may imply different requirements on the optimization process S307. If the return video streams should be ready for direct delivery and use for the clients 14a-14d, there must be a return video stream with a bitrate that matches the video stream request with the lowest bitrate, otherwise that video stream request cannot be matched. However, if there are components in the surrounding system that may process or reconfigure the return video stream on its way to the client with the lower bitrate requirement, it could be possible to not generate a return video stream fulfilling the lowest requirement and instead relying on for example a transcoding process which can generate a return video stream with a lower bitrate during transmission to a particular client. An example of such a component is a server that receives video from several cameras and provide video streams to a one or more clients. The server has the capacity to perform video transcoding of the received video streams (return video streams in this context). The server could for example be part of a video conference system. The functionality of the system with respect to transcoding needs to be known by the streaming controller 20 when performing the optimization process S307.

Going more into the details of determining S308 the number of return video streams, the number can be determined before determining the bitrates of the return video streams or in parallel. Put differently, when determining the bitrates there may be one fixed number of return video streams to optimize the bitrates for or a plurality of numbers of return video streams can be evaluated for determining S308 an optimal combination of number of return video streams and their bitrates.

In one embodiment, the number of return video streams is determined S308 as the maximum number of possible video streams that the encoder 12 can generate in parallel. The maximum number of possible video streams may be specific for a certain resolution, for example that the encoder 12 can generate one 1080p video stream, one 720p video stream and one 360p video stream in parallel. The streaming controller 20 may be arranged to selectively perform the optimization process S307 on condition that the number of detected video stream requests, optionally specific for a certain resolution, exceeds the maximum number of video streams that the encoder 12 can generate at the same time. In another embodiment, a preferred power consumption for the encoder 12 is considered when determining the number of return video streams. The encoder 12 is in this case limited to a threshold number of encoded video streams in order to not exceed the preferred power consumption, even if the encoder 12 is capable of generating more. In yet another embodiment, the number of return video streams is calculated in view of the amount (number) of detected video stream requests. A predefined calculation formula can be used for this purpose. In one embodiment, the calculation formula defines a logarithmic function to calculate the number of return video streams from the number of detected video stream requests. In other words, the number of return video streams is calculated as a logarithm of the amount of video stream requests. An example of a suitable logarithmic function is

$$N_{return} = \left\lceil \log_2(N_{request}) \right\rceil$$ . For this example, a number of requested video streams being $N_{request} = 3$ would result in a number of return video streams being $N_{return} = 2$ being the least integer greater than or equal to $\log_2(3)$, and $N_{request} = 6$ would result in $N_{return} = 3$ being the least integer greater than or equal to $\log_2(6)$. By calculating the number of return video stream using a predefined formula, an advantageous balance between processing utilization and user experience can be achieved for varying amounts of video stream requests.

In contrast to a number of return video streams that is determined independently of their bitrates, a varying number of candidate return video streams may be considered in the optimization process S307. Different number of return video streams can be considered in the optimization process S307 for finding an optimal set of return video streams and their bitrates. For example, the streaming controller 20 may be configured to select a higher number of return video streams (provided that it is possible for the encoder 12 to generate) on condition that the accumulated QoE loss can be lowered to a certain degree compared to the accumulated QoE loss of an optimal subset of a lower number of return video streams. A power consumption of the encoder 12 may be one parameter that the optimization of the number of return video streams is based on. Put differently, it may be justifiable to cause a higher power consumption as a result of a higher number of return video stream only if the possible decrease in accumulated QoE is sufficiently high compared to an accumulated QoE loss for a lower number of return video streams.

In the example in Fig. 4, the streaming controller 20 concludes in its optimization process S307 that a combination of three video streams is optimal and that the set of bitrates $B_1$, $B_2$, $B_3$ for the three video streams results in the lowest accumulated QoE decrease (or QoE drop) = $A_1 + \Delta_2 + \Delta_3$. It can be noted that there may be candidate sets of a higher number of video streams that would yield a lower accumulated QoE loss, however these have been dismissed by the streaming controller 20 in view of restrictions in the optimization process S307, for example in view of power consumption.

Next, the streaming controller 20 obtains S312 the number of return video streams in accordance with the determined number of return video streams and which bitrates they should have. Accordingly, the streaming controller 20 sends instructions 22 to the encoder 12 for performing the encoding of the return video streams. The instructions 22 may also include any restrictions to one or more of the return video streams, for example an FPS value or resolution that one or more of the return video streams should be encoded with. In one embodiment, the encoder 12 encodes the return video streams 24 and returns them to the streaming controller 20. Next, the encoded return video streams 24 are transmitted to the clients in response to the plurality of video stream requests. Already when sending instructions to the encoder 12, the streaming controller 20 has decided how the return video streams 24 match the plurality of video stream requests since this is a result from the optimization process S307. In another embodiment, the streaming controller 20 does not handle the actual return video streams 24 but merely assures that they are streamed (transmitted) to the clients according to the matching. Information about which return video stream that matches which video stream request may be included in the instructions 22 that are sent to the encoder 12. In other words, the return video stream 24 may be sent from the encoder 12 to a transmitter (not illustrated) for being streamed to the clients, without going through the streaming controller 20.

The method 300 that the streaming controller 20 performs is an ongoing process. This means that upon detecting a change in the plurality of video stream requests, such as a new video stream request, a changed video stream request or if a client disconnects (meaning that its video stream request(s) disappears from the streaming controller's 20 perspective), the method 300 may be triggered for determining updates in the encoded live video streams with respect to number of return video streams and their bitrates in order to optimize the user experience for the clients that are currently connected. The method 300 can also be triggered by that an obtained current bandwidth for one or more of ongoing streaming of return video streams from the camera 10 crosses a threshold, i.e., that a bandwidth for a transmission channel increases or decreases more than a threshold value. The bandwidth for one or more of the ongoing streaming of return video streams may be regularly measured, estimated or otherwise obtained by the camera 10. Specifically, the bandwidth can be provided by the one or more client(s) 14a-14d. Put differently, the streaming controller 20 may be adapted to obtain a current bandwidth for transmission of video to the one or more clients 14a-14d, and adapted to trigger an execution of the method 300 upon a current bandwidth deviating more than a threshold value, as compared to a reference bandwidth value, for transmission to at least one of the one or more clients. The reference bandwidth value may be the bandwidth that was effective for the concerned transmission channel at the latest execution of the method 300.

Fig. 5 illustrates an embodiment where the streaming controller 20 is part of a relay device 50 which is connected to a camera device 10 and to clients 58. The relay device 50 may be, for example, a cloud server that distributes received video streams to one or more clients or a recorder that works as a relay for video streams between one or more cameras and one or more clients.

In this embodiment, the streaming controller 20 detects S302 a plurality of video stream requests from the clients 58. It performs the steps of obtaining S304 maximum bitrate value for return video streams, calculating S306 requested QoE values, determining S308 a number of return videos, and determining S310 bitrates of the return videos (by the optimization process explained above) according to the same concepts and considerations as disclosed above. For the step of obtaining S312 the number of return videos, the streaming controller 20 sends instructions 52 to the camera device 10. The camera device 10 receives the instructions and generates, using its encoder 12, return video streams 54 in accordance with the received instructions 52, and sends the return video streams 54 to the relay device 50. The streaming controller 20 in the relay device 50 then streams S314 the return video streams 54 to the clients 58, meaning that the streaming controller 20 makes sure that each video stream request is responded to with a return video stream according to the matching as determined in the optimization process. As mentioned for previous embodiments, the return video streams 54 may or may not pass through the streaming controller 20 on their way to the clients 58.

The relay device 50 may comprise circuitry for reconfiguring a return video stream with respect to encoding characteristics. For example, a return video stream 54 may be transcoded (decoded and re-encoded) to obtain a video stream with another resolution, FPS, or being of another encoding format. As mentioned earlier, this kind of reconfiguration capacity may be known by the streaming controller 20 and considered when performing the optimization process S307.

Going into the technical configuration of the streaming controller 20, it may be noted that the functionality of elements disclosed herein, for example the streaming controller 20, may be configured as a hardware implementation, a software implementation, or a combination of both. The functionality may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the functionality. Processors are considered processing circuitry or circuitry as they include transistors and other circuitry therein. The circuitry of the streaming controller 20 may be in the form of a processor, such as a microprocessor, which in association with computer code instructions stored on a (non-transitory) computer-readable medium, such as a non-volatile memory, causes the streaming controller 20 to carry out (part of) any method disclosed herein. Examples of non-volatile memory include read-only memory, flash memory, ferroelectric RAM, magnetic computer storage devices, optical discs, and the like. In a software case, the streaming controller 20 may thus correspond to a portion of computer code instructions stored on the computer-readable medium, that, when executed by the processor of the streaming controller 20, causes the streaming controller 20 to carry out the described functionality. It is to be understood that it is possible to have a combination of a hardware and a software implementation. As an example, some of the functionality of the streaming controller 20 may be implemented in hardware and others in software.

The embodiments described herein are to be understood as illustrative examples of the disclosure. Further embodiments of the disclosure are envisaged. For example, the proposed method works for different system architectures that may comprise on-prem servers and cloud servers or a combination of both. Further the system architectures may include communication based on various network technologies including wired networks, wireless networks and cellular networks.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. A method for streaming live coded video to one or more clients, the method comprising:

   detecting (S302) a plurality of video stream requests from one or more clients (14a-14d, 58), for each video stream request, obtaining (S304) a maximum bitrate value that a return video stream (24, 54) is allowed to have, calculating (S306) a requested quality of experience, QoE, value for each video stream request in view of the maximum bitrate for the video stream request, determining (S308, S310) a number of return video streams (24, 54) being lower than the plurality of video stream requests, and having bitrates ($B_1$, $B_2$, $B_3$) such that each of the video stream requests can be matched with a return video stream (24, 54) having a bitrate equal to or lower than the maximum bitrate value of the video stream request, wherein the bitrates ($B_1$, $B_2$, $B_3$) of the return video streams (24, 54) are determined such that a cumulative difference between the QoE value of each video stream request and a calculated return QoE of a matching return video stream is minimized for the determined number of return video streams (24, 54),

obtaining (S312) the number of return video streams (24, 54) in accordance with the determined bitrates ($B_1$, $B_2$, $B_3$),

streaming (S314) the return video streams (24, 54) to the one or more clients (14a-14d, 58) such that each video stream request is responded to with a matching return video stream (24, 54).

2. The method according to claim 1, wherein the act of obtaining (S304) a maximum bitrate value that a return video stream (24, 54) is allowed to have comprises obtaining a requested maximum bitrate value included in the video stream request.

3. The method according to claim 1, wherein the act of obtaining (S304) a maximum bitrate value that a return video stream (24, 54) is allowed to have comprises determining an available bandwidth for transmission of the return video stream.

4. The method according to any one of the preceding claims, wherein the act of determining (S308) the number of return video streams (24, 54) comprises calculating the number in view of the amount of video stream requests in the plurality of video stream requests.

5. The method of claim 4, wherein the number of return video streams (24, 54) is calculated (S308) as a logarithm of the amount of video stream requests.

6. The method according to any one of the preceding claims, wherein the number of return video streams (24, 54) is determined (S308) in view of a preferred power consumption for an encoder (12) that encodes the return video streams.

7. The method according to any one of the preceding claims, wherein the requested QoE values and return QoE values are calculated as one of the following measures: SSIM, PSNR, VMAF, UQ1.

8. The method according to any one of the preceding claims, wherein the video stream requests comprise one or more requested encoding characteristics, and wherein the requested QoE value for each video stream request is calculated (S306) in view of the requested encoding characteristics.

9. The method according to any one of the preceding claims, wherein the requested QoE value for each video stream request is calculated (S306) in view of predetermined encoding characteristics in case the video stream request does not comprise requested encoding characteristics.

10. The method according to claim 9, wherein the predetermined encoding characteristics are determined in view of a video scene for the requested video stream or in view of a type of camera (10) used for capturing the requested video stream.

11. A computer-readable medium having stored thereon instructions that, when executed by a processor, cause the processor to perform the method according to any one of the claims 1-10.

12. A streaming controller for controlling streaming of live coded video to one or more client (14a-14d, 58), the streaming controller (20) comprising circuitry being adapted to perform the method according to any one of claims 1-10.

13. The streaming controller according to claim 12, wherein the circuitry is further adapted to obtain a current bandwidth for transmission of video to the one or more clients (14a-14d, 58), and trigger an execution of the method according to any one of claims 1-10 upon a current bandwidth deviating more than a threshold value for transmission to at least one of the one or more clients (14a-14d, 58).

14. A camera system comprising the streaming controller (20) according to any one of claims 12 or 13.

15. The camera system according to claim 14, wherein the streaming controller (20) is comprised in a relay device (50) of the camera system.

Fig. 1a (prior art)

Fig. 1b (prior art)

Fig. 2

300

**S302**
Detect a plurality of video stream requests from client(s)

**S304**
Obtain maximum bitrate value for return video streams

**S306**
Calculate requested QoE values

**S307**

**S308**
Determine a number of return video streams

**S310**
Determine bitrates of return video streams

**S312**
Obtain the number of return video streams

**S314**
Stream the return video streams to the client(s)

Fig. 3

Fig. 4

Fig. 5

Europäisches
Patentamt

European
Patent Office

Office européen
des brevets

# EUROPEAN SEARCH REPORT

**Application Number**

EP 24 21 7876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NGUYEN MINH ET AL: "CADLAD: Device-aware Bitrate Ladder Construction for HTTP Adaptive Streaming", 2022 18TH INTERNATIONAL CONFERENCE ON NETWORK AND SERVICE MANAGEMENT (CNSM), IFIP, 31 October 2022 (2022-10-31), pages 198-204, XP034241034, DOI: 10.23919/CNSM55787.2022.9964669 [retrieved on 2022-12-02] * abstract * * B. Bitrate Ladder Construction; page 199 * * III. CADLAD Approach; page 200 * * figure 1 * | 1-15 | INV. H04N7/18 H04L65/752 H04N21/2187 H04N21/2343 H04N21/24 H04N21/2662 |
| A | LIU CHANG ET AL: "Adaptive Live Streaming for Multi-user Access with Fairness Guarantee", 2023 IEEE INTERNATIONAL SYMPOSIUM ON BROADBAND MULTIMEDIA SYSTEMS AND BROADCASTING (BMSB), IEEE, 14 June 2023 (2023-06-14), pages 1-6, XP034399842, DOI: 10.1109/BMSB58369.2023.10211604 [retrieved on 2023-08-16] * abstract * * III. System Overview * | 1-15 | TECHNICAL FIELDS SEARCHED (IPC) H04N H04L |

The present search report has been drawn up for all claims

| Place of search | Date of completion of the search | Examiner |
|---|---|---|
| The Hague | 3 June 2025 | Naci, Suphi Umut |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)